# EUROPEAN PATENT APPLICATION

(11) **EP 2 746 723 A1**
(43) Date of publication of application: **25.06.2014**
(21) Application number: 12198635.0
(22) Date of filing: 20.12.2012
(51) Int. Cl.: G01C 15/00, B64F 5/00, G01B 21/00, G01B 3/00, G01B 5/00

(54) **Measuring method and system for measuring positions of elements of a structure**

(71) Applicant: Airbus Operations GmbH, 21129 Hamburg (DE); EADS Deutschland GmbH, 85521 Ottobrunn (DE)
(72) Inventor: Maslennikov, Johannes, 22525 Hamburg (DE); Becker, Benjamin, 80469 München (DE)
(74) Representative: Maiwald Patentanwalts GmbH

(57) **Abstract**

A method for measuring a position of an element (16) of a structure (10) comprises the steps of: attaching a receiving device (18) to the element (16) at a measurement position; attaching a first reference device (20, 20b) to the receiving device (18); determining a first measurement point with a first measurement device (22, 22b) adapted to measure a position of the first reference device (20, 20b); removing the first reference device (20, 20b); attaching a second reference device (20, 20a) to the receiving device (18); and determining a second measurement point with a second measurement device (22, 22a) adapted to measure a position of the second reference device (20, 20a).

## Description

### FIELD OF THE INVENTION

The invention relates to a method for measuring a position of an element of a structure and to a measurement system.

### BACKGROUND OF THE INVENTION

When an industrial process like the construction of a large scale structure is supported by a measurement system, measurement points have to be measured on the object coordinate system of the structure. In a first step, known reference points have to be determined and in a second step, the position of an additional element may be determined.

With laser tracker devices, the measurement points usually are determined one after the other. In this case, wrong measurement points may be determined, when the structure moves, vibrates or deforms a bit during the measurements.

Further possible measurement techniques are based on photogrammetry, in which the position of a measurement target is determined with the aid of camera images taken from different positions, and on tactile position measurements, in which a touch probe as measurement target is brought into contact with a reference position. The position of the touch probe may be determined by the position and the orientation of an arm fixed to the touch probe.

As a rule, the reference positions or reference points are based on single points or two point adapters. Via an offset or a vector reduction, the reference points may be determined from these points. For example, specific elements of the structure like holes are used as basis for a reference point. However, these kinds of reference points may only be provided at specific positions and may have the problem that they are aligned in a wrong direction with respect to the measurement device.

### DESCRIPTION OF THE INVENTION

It is an object of the invention to provide a simple, fast and cheap measurement method that will produce measurement values with high accuracy.

This object is achieved by the subject-matter of the independent claims. Further exemplary embodiments are evident from the dependent claims and the following description.

An aspect of the invention relates to a method for measuring a position of an element of a structure, for example, the structure may be the primary and/or secondary structure of an aircraft. However, it is also possible that the method may be used with structures like general vehicles (such as ships) or buildings.

According to an embodiment of the invention, the method comprises the steps of: attaching a receiving device to the element at a measurement position; attaching a first reference device to the receiving device; determining a first measurement point with a first measurement device adapted to measure a position of the first reference device; removing the first reference device; attaching a second reference device to the receiving device; determining a second measurement point with a second measurement device adapted to measure a position of the second reference device. Also the second reference device may be removed from the receiving device.

A receiving device may be seen as a "nest" for the first and second reference device. Usually not only one but a plurality of receiving devices will be attached to elements of the structure. Each of the receiving devices may receive different types of reference devices with different measurement targets.

After the receiving device is installed in the structure by attaching it (for example by glueing) to the element of the structure, the (measurement) position of the receiving device is determined with a first measurement device. A first reference device with a first type of measurement target is attached to the receiving device and a first measurement point (i.e. measurement value indicative of the measurement position) is measured with the first measurement device.

The first measurement device may be very accurate (such as a laser tracker). After the first measurement, the data obtained by the first measurement device (i.e. the first measurement point or a plurality of first measurement points for a plurality of first reference devices) may be used as reference point(s) for the second measurement with the second measurement device. As the receiving device stays at its original position, this reference data is very accurate.

When necessary, for example for quality control or for moving an element of the structure to its destination position, the second reference device(s) may be attached to the receiving device(s) and a second, third, etc. measurement may be performed with the second, third, etc. measurement device, which may be well suited for the application, resources planning and assembly conditions (stations, blue colours, parallelisation of activities,...) and/or may be faster and more robust to disturbances as the first measurement device, but may be less accurate.

If at least three second reference devices are recognized by the second measurement device (via their reference targets), a referencing of the second measurement points with the first measurement points may take place. By adjusting the reference data (from a construction plan and/or from the first measurement) with the second measurement points (for example by a best fit transformation), additional information may be gathered, like a thermal deformation of the structure, an offset of a single reference point. In such a way, the measurement space may be scaled and/or local deformations may be detected.

The method is suited for production environments. The permanently installed receiving device may be installed easily, may be used for a long time period and the reference point or reference position defined by the receiving device does not move with respect of the element of the structure, the receiving device is attached to. Furthermore, the receiving devices may be attached in such a way, that all measurement positions are easily to reach.

Cost may be saved, when a reference device is provided with more than one measurement target. Such a reference device may have to be calibrated only once to its reference point.
The reference device may indicate the reference point directly and/or indirectly. In the second case, at least three points on the reference device may define the location of the reference point (for example via mathematic algorithms). Costs may be saved, since such a reference device may be calibrated in such a way that the manufacturing requirements are reduced.
It is possible that the first and/or second position measurement devices are online measurement devices, i.e. are adapted to acquire a plurality of measurement points of a plurality of reference devices simultaneously or in only a short time.

With the method, assembling processes of the structure may be supported, for example by visualizing the differences between the measurement points and the positions defined by the construction plan and/or by supporting the movement of an element of the structure towards its destination. Also quality control may be supported, for example by visualizing and/or measuring of mounting positions.

It has to be noted that the receiving device may be permanently attached to the structure, for example much longer than the reference devices may be attached to the receiving device. For example, when the measurement method is used during the constructing of the structure, the receiving device may be attached to the same point of the structure during the complete construction process. For example, the receiving device may be glued, adhesively attached and/or screwed to the element of the structure.

On the other hand, the reference devices may only be temporarily attached to the receiving device. For example, they may be attached in such a way, that the connection between the receiving device and the reference device may be loosened without the aid of a tool.

According to an embodiment of the invention, the receiving device comprises a first bearing element and each of the first reference device and second reference device comprises a second bearing element, such that a reference point of a reference device does not move with respect to the receiving device it is attached to, when the reference device is rotated with respect to the receiving device. A reference device may be rotated freely with respect to its receiving device, such that a measurement target carried by the reference device may be oriented towards the respective position measurement device, which may comprise a measurement sensor adapted for sensing the measurement target.

The rotation point about the reference device is rotating defines a reference point for the receiving device (which does not move with respect to the structure) and a reference point for the reference device (with respect to a measurement target), which may be determined very exactly for each reference device separately before the measurement of the structure. The reference point of the reference device may be used for the determination of the second measurement point from the measured position of the measurement target(s) attached to the reference device.

According to an embodiment of the invention, the first bearing element has a bearing surface formed like a truncated cone and/or the second bearing element has a bearing surface formed like a spherical cap. For example, the spherical functional surface of the reference device may be received by a conical functional surface of the receiving device. In such a way, a ring-shaped contact surface is generated between the first bearing and the second bearing, which unambiguously determines the sphere center defined by the spherical surface.

The sphere center of the second bearing element may determine the reference point of the reference device. When the reference device is attached to the receiving device, the sphere center may be at the reference point of the receiving device.

It has to be noted that the bearing surfaces of all receiving targets may be equally formed and in particular may have the same cone angle. Also, the bearing surfaces of the reference devices may be formed equally, for example by spheres having the same diameter (such as about 0,5 inch, 1.27 cm).

According to an embodiment of the invention, the receiving device and the first and/or second reference device are temporarily attached with a magnet. The magnet may be part of the receiving device or the reference device. In such a way, the bearing elements may stick together, when brought into contact and may easily be removed from each other, when a reference device has to be exchanged.

According to an embodiment of the invention, the first and/or second reference device comprises a plate as a carrier for a measurement target. The second bearing and one or more measurement targets may be fixed to this plate.

According to an embodiment of the invention, the first and/or second reference device comprises a (metal) sphere as a second bearing element to be attached to a first bearing element of the receiving device. For example, a reference device may comprise a sphere (which may be fixed to a carrier for one or more measurement targets), wherein the sphere provides the second bearing for the reference device. Such a reference device may be targeted in the direction to a sensor of the second measurement device, since a rotation of the reference device in the receiving device does not result in a movement of the reference point.

According to an embodiment of the invention, the first reference device is a laser target and the first measurement device is a laser tracker device. For example, the first reference device may comprise a retro reflector. The retro reflector may be positioned inside an at least partially spherical carrier such that it is aligned with the center of the spherical carrier. A laser tracker device may be very accurate but may be very sensible to disturbances like vibrations or persons walking around in the vicinity of the receiving device, which may cause small deformations.

According to an embodiment of the invention, the second reference device comprises a carrier for a light source (as measurement target), for example an infrared LED, and the second measurement device is a light tracker device. For example, the light tracker device may be a device that is adapted for measuring all positions of all reference devices simultaneously.

According to an embodiment of the invention, the second reference device comprises at least three light sources, for example infrared LEDs, that are attached to a carrier of the second reference device.

In general, a reference device may comprise a spherical bearing surface and at least three measurement targets that are aligned not singularly and that are fixed together. In a calibration process, the position of the sphere center of the spherical bearing surface (and therefore the reference point) may be determined from the arrangement of the measurement targets.

Furthermore, it is possible to use more than one type of second reference devices. It also is possible, that a third measurement is made with a third reference device attached to the receiving device and a third position measurement device.

According to an embodiment of the invention, the second (or third) reference device comprises a carrier with a high-contrast target image (as measurement target) and the second (or third) measurement device comprises at least one camera.

For example, the high-contrast target image may comprise one or more circles or other geometries painted on the carrier plate. Different reference devices may have different target images, such that the reference device may be identified by the measurement device.

It is possible that the second reference device is a photogrammetry device. The second measurement device may comprise more than one camera. In this case new reference devices may be oriented in space (and the photogrammetry device may be fixed with respect to the structure).

According to an embodiment of the invention, the second measurement device is adapted for determining its own position and/or orientation in space by detecting reference targets fixed to the structure, for example with a camera. In this case, the second measurement device may comprise only one camera. The second measurement device may be connected to an object that may be oriented in space with the aid of the second measurement device detecting reference devices fixed to the structure. It also possible that a mounting device or a holder device comprises such a second measurement device that is fixed to the mounting device or to the holder device for orienting and/or positioning the mounting device or the holder device.

It has to be noted that more than one type of measurement target may be fixed to one reference device. For example, a reference device may carry light sources and a target image.

According to an embodiment of the invention, the second (or third) reference device is a touch probe and the second (or third) measurement device is a tactile position measurement device. For example, the tip of the touch probe may be provided with a sphere, which sphere center provides the reference point for the tactile position measurement device.

A further aspect of the invention relates to a measurement system for measuring the structure. In general, such a measurement system may comprise one or more of the above and below mentioned position measurement devices, a computer for evaluating the sensor data of the position measurement devices. Furthermore, the measurement system may comprise a visualisation tool (computer with screen) for showing the results of the measurements.

Furthermore, the measurement system may comprise the above and below mentioned receiving devices and/or at least some of the above and below mentioned reference devices.

According to an embodiment of the invention, the measurement system comprises a plurality of receiving devices; a plurality of first reference devices (for example laser targets); and a plurality of second reference devices (for example with a carrier for light sources and/or target images). Each of the plurality of receiving devices comprises a first bearing element for temporarily attaching a second bearing element of one of the first and second reference devices, such that a reference point of a reference device does not move with respect to a receiving device, it is attached to, when the reference device is rotated with respect to the receiving device. Each of the first reference devices carries a first measurement target (like a laser target) for a first position measurement device and each of the second reference devices carries a second measurement target for a second position measurement device.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a three-dimensional view of a primary structure of an aircraft with a measurement system according to an embodiment of the invention.
Fig. 2 shows a three-dimensional view of a receiving device for a measurement system according to an embodiment of the invention.
Fig. 3 shows a three-dimensional view of a reference device for a measurement system according to an embodiment of the invention.
Fig. 4 shows a three-dimensional view of the other side of the reference device of Fig. 3.
Fig. 5 shows a three-dimensional view of the reference device of Fig. 3 attached to the receiving device of Fig. 2.
Fig. 6 shows a three-dimensional view of a reference device for a measurement system according to an embodiment of the invention.
Fig. 7 shows a three-dimensional view of the reference device of Fig. 6 attached to the receiving device of Fig. 2.
Fig. 8 shows a three-dimensional view of a reference device for a measurement system according to an embodiment of the invention.
Fig. 9 shows a three-dimensional view of a reference device for a measurement system according to an embodiment of the invention.
Fig. 10 shows a flow diagram for a measuring method according to an embodiment of the invention.

In principle, identical parts are provided with the same reference symbols in the figures.

### DETAILED DESCRIPTION OF EXEMPLARY EMBODIMENTS

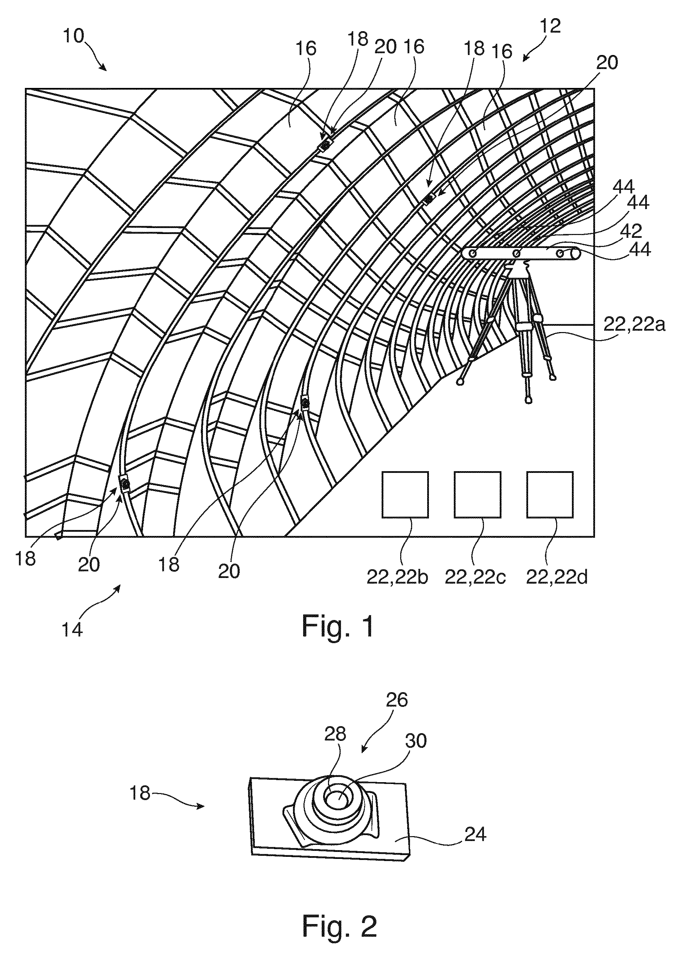

Fig. 1 shows an exemplary primary structure 10 of an aircraft 12 together with a measurement system 14. The primary structure comprises struts, stringers and a skin as elements 16.

The measurement system 14 comprises a number of receiving devices 18 that are attached to the elements 16 and a number of reference devices 20 that may be attached to the receiving devices 18.

Furthermore, the measurement system 14 comprises a number of measurement devices 22, like a light tracker device 22a, a laser tracker device 22b, a photogrammetry device 22c and a tactile position measurement device 22d. Each of the measurement devices 22 is adapted for determining the position of a corresponding reference device 20, which will be explained in the following in more detail.

Fig. 2 shows a receiving device 18, which comprises a base plate 24 and a bearing element 26 that is attached to the center of the base plate 24. The base plate has a rectangular shape, for example about 20 mm to about 40 mm. The base plate 24 is adapted for being attached to an element 16 of the structure 10. For example, the base plate 24 may be glued or adhesively attached to the element 16.

The bearing element 26 has a conical bearing surface 28 and a magnet 30 positioned in the middle of the conical bearing surface 28.

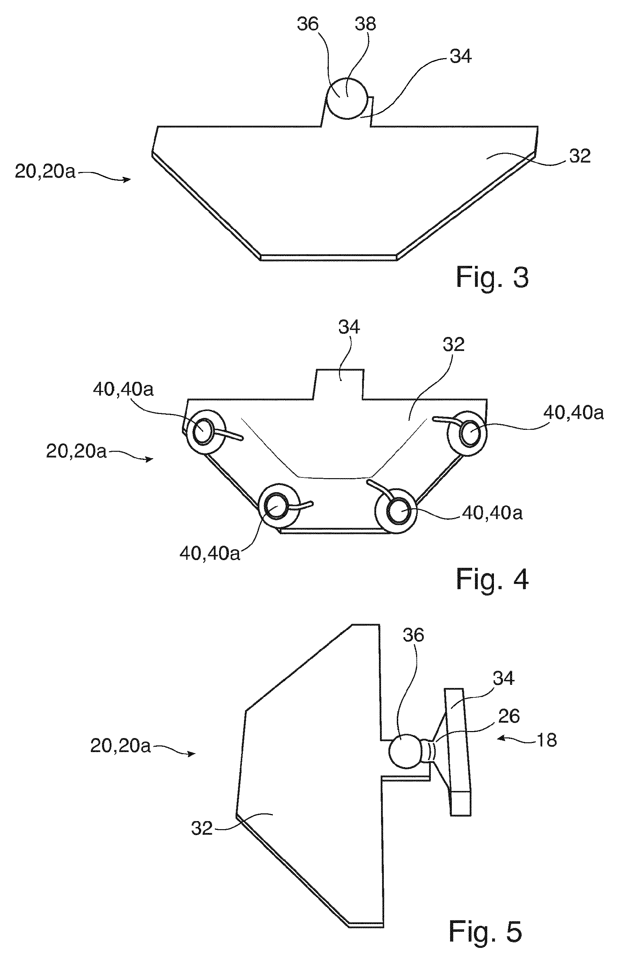

Fig. 3 and 4 show a reference device 20a from different sides. The reference device 20a has a carrier plate 32 with a substantially trapezoid shape. At the longer edge of the trapezoid, the carrier plate 32 has a protrusion 34 onto which a bearing element 36 in the form of a sphere 36 is fixed. The bearing element 36 provides a bearing surface 38 that fits onto the bearing surface 28 of the bearing element 26.

On the side opposite to the side the sphere 36 is attached to, the carrier plate 32 carries four measurement targets 40 in the form of infrared LEDs 40a. The infrared LEDs 40a are fixed to the corners of the carrier plate 32.

The reference device 20a may be used together with a light tracker device 22a that comprises a sensor beam 42 with three infrared cameras 44 as sensors. The light tracker device 22a may take pictures of the reference devices 20a attached to the receiving devices 18 and may determine the position of the reference devices 20a.

Fig. 5 shows the reference device 20a attached to the receiving device 18. The magnet 30 pulls the sphere 36 onto the bearing element 26 and the reference device 20a may be rotated freely about the center of the sphere 36.

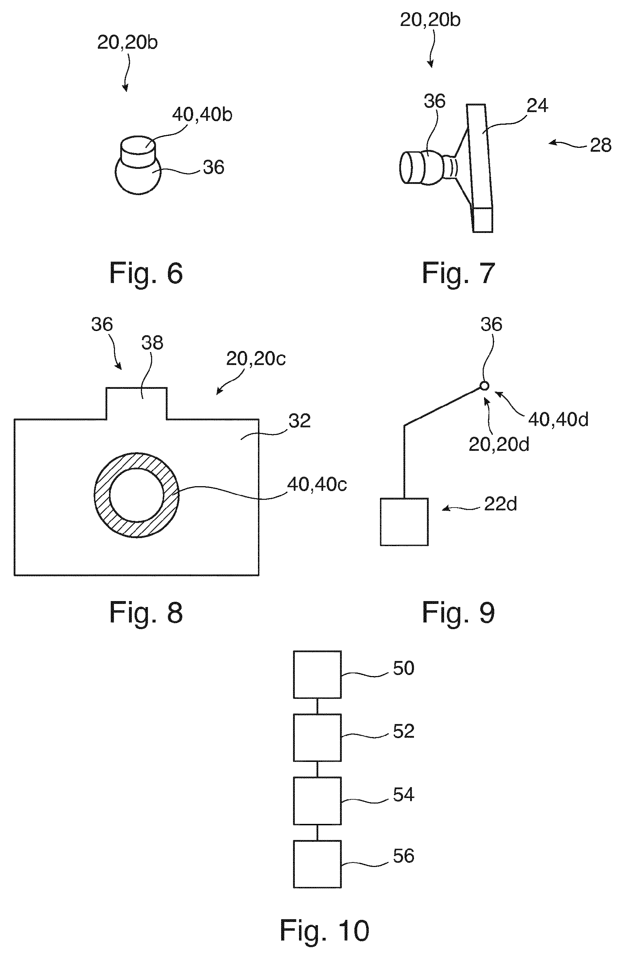

Fig. 6 shows a reference device 20b that may be used with a laser tracker device 22b. The reference device 20b comprises a bearing element 36 with an outer surface 38 in the form of a (partial) sphere. A measurement target 40 in the form of a retro reflector 40b is centred in the bearing element 36.

The laser tracker device 22b may direct a laser beam towards the reference device 20b, which is reflected by the retro reflector 40b back to the laser tracker device 22b. From the reflected laser beam, the laser tracker device 22b can determine the position of the reference device 20b.

Fig. 7 shows the reference device 20b attached to the receiving device 18. The magnet 30 pulls the sphere 36 onto the bearing element 26 and the reference device 20b may be rotated freely about the center of the sphere 36.

Fig. 8 shows a reference device 20c that may be used with a photogrammetry device 22c. The reference device 20c may have the same components like the reference device 20a. However, on the side opposite to the side with the bearing element 36, the reference device 20c comprises a high-contrast target image 40c as measurement target 40. The target image 40c may have more than one circle or, more general, one or more coded marks that may be used for identifying the reference device. With at least three marks, the position and/or orientation of the reference device may be determined exactly.
The photogrammetry device 22c may have two cameras and may be adapted for determining the position of the reference device 20c via the target 40c photographed from two different directions with the cameras.

Fig. 9 shows a reference device 20d that may be used with a tactile position measurement device 22d. The reference device 22d may comprise an arm 20d as reference device 20 and may comprise a sphere 36 at the tip of the arm. When the sphere 36 is positioned in the bearing element 26 of the receiving device 18, the tactile position measurement device 22d is adapted for determining the position of the sphere 36 by way of the position and orientation of the arm 20d.

Fig. 10 shows a flow diagram for performing a measurement with the structure 10.

In step 50, a number of receiving devices 10 is attached to elements 16 at specific measurement positions. For example, the receiving devices 10 may be glued to the elements 16. The measurement positions may be chosen in such a way, that a geometrical arrangement of the elements 16 may be determined. For example, the measurement positions may be such that the geometrical arrangement of the elements 16 may be compared with a construction plan.

In step 52, first reference devices 20 are attached to the receiving device 18 and first measurement points are determined with a first measurement device 22 that is adapted to measure a position of first reference devices 20.

Step 52 may be used for determining the exact positions of the receiving devices 18, in particular for exactly determining the reference points of the respective receiving device 18. The reference point may be the sphere center of the bearing element 36 of the reference device 20.

For example, step 52 may be performed with a laser target 20b as reference device 20 and with a laser tracker device 22b as position measurement device 22. With a laser tracker, the first measurement points may be determined with high accuracy. The reference points may be determined from the first measurement points and thus also may have a high accuracy.

In step 54, the first reference devices 20 are removed. It has to be noted that the receiving devices 18 stay at their position and may be not removed until the end of the process that is supported with the measurement system 14. Such a process, for example, may be the construction of the structure 10.

Since a laser tracker device 22b may be very sensible with respect to disturbances like vibrations and it may not be optimally adapted for measurements during the complete process, for example at times when a lot of persons are inside the structure 12 or when machines are working on the structure.

Thus, in step 56, second reference devices 20 (such as reference devices 20a, 20c or 20d) are attached to the receiving devices 18 and second measurement points may be determined with a second measurement device 22 (such as 22a, 22c, 22d) adapted to measure a position of the second reference device 20.

The second measurement points may be compared to the first measurement points or to the reference points derived from the first measurement points. For example, with the second measurements point it may be determined, whether the elements 16 of the structure 10 are at the correct positions, whether the elements 14 have deformed and/or whether the elements conform to a construction plan.

It is possible that during the supported process, step 56 is repeated with a different kind of reference device 20 corresponding to a different type of position measurement device 22.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A method for measuring a position of an element (16) of a structure (10), the method comprising the steps of:
attaching a receiving device (18) to the element (16) at a measurement position;
attaching a first reference device (20, 20b) to the receiving device (18);
determining a first measurement point with a first measurement device (22, 22b) adapted to measure a position of the first reference device (20, 20b);
removing the first reference device (20, 20b);
attaching a second reference device (20, 20a) to the receiving device (18);
determining a second measurement point with a second measurement device (22, 22a) adapted to measure a position of the second reference device (20, 20a).

2. The method of claim 1,
wherein the receiving device (18) comprises a first bearing element (26) and each of the first and second reference device (20) comprises a second bearing element (36), such that a reference point of a reference device (20) does not move with respect to the receiving device (18), it is attached to, when the reference device (20) is rotated with respect to the receiving device (18).

3. The method of claim 2,
wherein the first bearing element (26) has a bearing surface (28) formed like a truncated cone.

4. The method of claim 2 or 3,
wherein the second bearing element (36) has a bearing surface (38) formed like a spherical cap.

5. The method of one of the preceding claims,
wherein the receiving device (18) and the first and/or second reference device (20) are temporarily attached with a magnet (30).

6. The method of one of the preceding claims,
wherein the first and/or second reference device (20a, 20c) comprises a plate (32) as a carrier for a measurement target (40).

7. The method of one of the preceding claims,
wherein the first and/or second reference device (20) comprises an at least partial sphere (36) as a second bearing element to be attached to a first bearing element (26) of the receiving device (18).

8. The method of one of the preceding claims,
wherein the first reference device (20b) is a laser target and the first measurement device is a laser tracker device (22b).

9. The method of one of the preceding claims,
wherein the second reference device (20a) comprises a carrier (32) for a light source (40a) and the second measurement device is a light tracker device (22a).

10. The method of claim 9,
wherein the second reference device (20a) comprises at least three light sources (40a) that are attached in a to a carrier (32) of the second reference device (20a).

11. The method of claim 9 or 10,
wherein the light source (40a) comprises an infrared LED.

12. The method of one of the preceding claims,
wherein the second reference device (20c) comprises a carrier (32) with a high-contrast target image (40c) and the second measurement device (22c) comprises at least one camera.

13. The method of one of the preceding claims,
wherein the second reference device (20d) is a touch probe and the second measurement device (22d) is a tactile position measurement device.

14. The method of one of the preceding claims,
wherein the structure is a structure (10) of an aircraft (10).

15. A measurement system (14), comprising:
a plurality of receiving devices (18);
a plurality of first reference devices (20b); and
a plurality of second reference devices (20a, 20c, 20d);
wherein each of the plurality of receiving devices (18) comprises a first bearing element (26) for temporarily attaching a second bearing element (36) of one of the first and second reference devices (20a, 20b, 20c, 20d), such that a reference point of a reference device does not move with respect to a receiving device (18) it is attached to, when the reference device is rotated with respect to the receiving device (18);
wherein each of the first reference devices (20b) carries a first measurement target (40b) for a first position measurement device (22b);
wherein each of the second reference devices (20a, 20c, 20d) carries a second measurement target (40a, 40c, 40d) for a second position measurement device (22a, 22c, 22d).
